# EUROPÄISCHE PATENTSCHRIFT

(11) **EP 1 584 798 B1**
(45) Veröffentlichungstag und Bekanntmachung des Hinweises auf die Patenterteilung: **23.03.2011**
(21) Anmeldenummer: 05450059.0
(22) Anmeldetag: 31.03.2005
(51) Int. Cl.: F01K 3/00, F01K 3/04

(54) **Verfahren und Einrichtung zur Erzeugung von Kraft und Wärme**
Method and apparatus for generating power and heat
Méthode et appareil pour la production d'électricité et de chaleur

(30) Priorität: 01.04.2004 AT 2442004 U
(43) Veröffentlichungstag der Anmeldung: 12.10.2005
(73) Patentinhaber: Beckmann, Georg, Dr., 1230 Wien (AT)
(72) Erfinder: Beckmann, Georg, Dr., 1230 Wien (AT)
(74) Vertreter: Rippel, Andreas

(56) Entgegenhaltungen:
- FR-A- 1 364 535
- US-A- 4 164 848
- PATENT ABSTRACTS OF JAPAN Bd. 009, Nr. 209 (M-407), 27. August 1985 (1985-08-27) & JP 60 069220 A (MITSUBISHI JUKOGYO KK), 19. April 1985 (1985-04-19)

## Beschreibung

Die Erfindung bezieht sich auf ein Verfahren zur Speicherung und Erzeugung von Kraft und Wärme aus Abwärme oder aus Brennstoffen, insbesondere Müll und festen Biomassen, unter Verwendung eines Dampferzeugers, wobei das Dampf-Wassergemisch aus der Heizfläche des Dampferzeugers einem Dampfspeicher zugeführt wird, und der Dampfraum des Dampfspeichers direkt oder über eine Überhitzerheizfläche mit einer Expansionsmaschine in Verbindung steht. Ferner ist Gegenstand der Erfindung eine Einrichtung zur Durchführung dieses Verfahrens sowie die Verwendung der Einrichtung.

Die Erzeugung von Kraft und Wärme aus Abwärme oder Brennstoffen, insbesondere aus festen Biomassen, unterliegt einer besonderen Problematik: das Wärmeangebot, in Form von Heißgas und Strahlungswärme, ist starken Schwankungen unterworfen, die aus dem vorgeschalteten Prozeß oder, im Fall der Nutzung von Müll und fester Biomassen, aus den naturbedingten Inhomogenitäten des Brennstoffes resultieren. Diese Schwankungen und die Gegebenheit, daß die Heißgastemperaturen derartiger Prozesse meist weit unterhalb der Brennraumtemperatur fossiler Brennstoffe liegen, bringt es mit sich, daß die Fortschritte der letzten Jahrzehnte in der Krafterzeugung für den vorliegenden Fall nicht zur Anwendung kommen können. Die zukünftige Energieversorgung mit Strom ("Kraft") und (Heizungs) Wärme, vor dem Hintergrund der CO2 Vermeidung, erfordert aber den vermehrten Einsatz von Kraft-Wärme-Kopplungen für diese Wärmequellen, insbesondere auch im kleinen und mittleren Leistungsbereich.

Gemäß dem Stand der Technik sind bezüglich der oben genannten Problemstellung folgende Problemlösungen gebräuchlich:
Dampfprozesse mit Großraumkesseln (Rauchrohrkesseln), die zwar ein günstiges Speichervermögen aufweisen, aber träge, teuer, im Druck und im Durchsatz beschränkt sind und in Verbindung mit einem Dampfprozeß bescheidene Wirkungsgrade bezüglich der Stromerzeugung aufweisen; eine nennenswerte Dampfüberhitzung schließt sich bei größeren Schwankungen in der Heißgastemperatur aus, Speisewasservorwärmerheizflächen, die die Rauchgasabkühlung verbessern und die Ökonomie erhöhen ("Economiser"), sind bei einem geringen Wärmeangebot nicht wirksam, da dann wenig Speisewasser nachgespeist wird, der Economiser wenig durchströmt wird und die Rauchgasabkühlung nicht sichergestellt ist. Befindet sich hinter dem Kessel und vor dem Kamin z.B. ein Schlauchfilter, so muß dieses, um eine Zerstörung auf Grund der hohen Abgastemperaturen zu vermeiden, über eine Bypaßleitung umgangen werden, d. h. die Abgaswärme wird nicht genutzt und das Abgas wird nicht gereinigt. Ähnliches gilt auch für den Anfahr- und Abfahrvorgang.

Hochgezüchtete Wasserrohrkessel, die in den gängigen Ausführungsformen: Naturumlaufkessel, Zwangsumlaufkessel, Durchlaufkessel entweder nur eine kleine oder gar keine Kesseltrommel aufweisen, besitzen ein fast verschwindendes Speichervermögen. Da derartige Kraft-Wärme-Kopplungsanlagen nach der Wärmeabnahme (in Ausnahmefällen nach der Stromabnahme) geregelt gefahren werden, ist eine Einrichtung zum Abführen der überschüssigen Wärme (Kühlturm -über Dach) vorzusehen, was eine Energieverschwendung darstellt.

Die oben genannten Problemlösungen erreichen meist in nur einem Betriebspunkt ("Bestpunkt") passable Gesamtwirkungsgrade; die sogenannten Jahreswirkungsgrade, also die gemittelten Wirkungsgrade über ein typisches Jahr mit seiner Heizlastlinie, sind erschreckend gering.

In der FR-A-1.364.535 ist ein Verfahren nach dem Oberbegriff des Anspruchs 1 beschrieben.

Die Erfindung hat es sich zum Ziel gesetzt, ein Verfahren der eingangs genannten Art zu schaffen, durch welches die geschilderten Probleme bei den bekannten Einrichtungen vermieden werden.

Erreicht wird dies dadurch, dass das Wasser aus dem Wasserraum des Dampfspeichers einem Wärmeverbraucher zugeführt wird.

Weitere Merkmale sind den Unteransprüchen zu entnehmen.

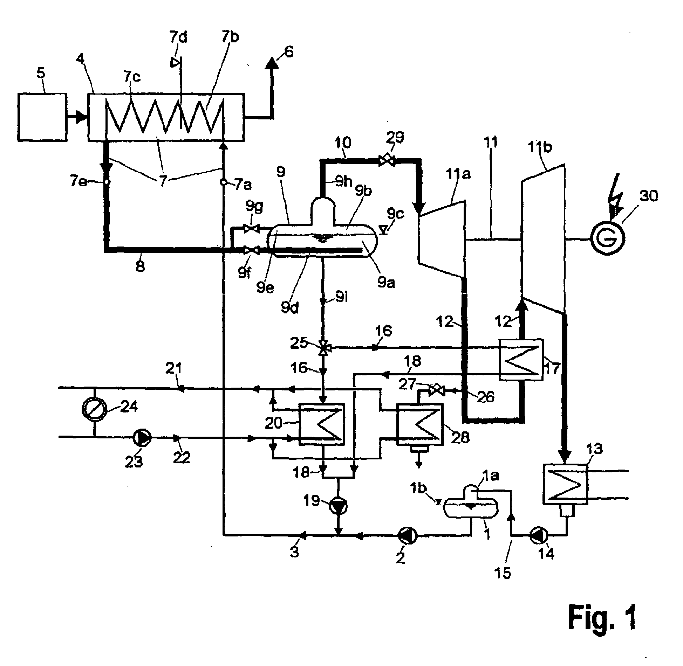

Die Fig. 1 zeigt beispielhaft die erfindungsgemäße Gesamtanlage: das Speisewasser wird aus einem Speisewassertank 1, der in der Regel einen aufgesetzten Entgaser 1a aufweist, oder einer sonstigen Wasservorlage, z.B. aus einem Vakuum- oder Heizkondensators, entnommen und über eine Speisewasserpumpe 2 und einer Speiseleitung 3 einem Dampferzeuger 4 zugeführt.

Dieser Dampferzeuger 4 erhält seine Beheizung z.B. von einer Heißgasquelle 5 und er gibt Kaltgas 6 ab. Der Dampferzeuger 4 erzeugt eigentlich nur Sattdampf und Sattwasser und weist eine Heizfläche 7 auf, die im normalen Betriebsfall eine Speisewasservorwärmung und eine Vorverdampfung herstellt. Dazu tritt das Speisewasser aus der Speiseleitung 3 in den Eintrittssammler 7a der Heizfläche 7, wird in der ersten Zone, dem Speisewasservorwärmer 7b, bis zum Punkt 7d dem Ausdampfungsbeginn vorgewärmt und anschließend in der zweiten Zone, im Vorverdampfer 7c, teilweise verdampft, so daß am Austrittssammler 7e ein Sattdampf-/Sattwassergemisch austritt, welches über eine Naßdampfleitung 8 einem Dampfspeicher 9 zugeführt wird. Der Punkt des Ausdampfungsbeginns stellt sich innerhalb der Heizfläche 7 je nach dem Betriebszustand von selbst ein, d.h. er wandert; dies ist betrieblich von Vorteil, da die gemeinsame Heizfläche immer voll genützt wird.

Der Dampfspeicher 9 ist ein Druckgefäß und ist mit Wasser gefüllt, über dem Wasserraum 9a befindet sich ein ist ein Dampfraum 9b, die Trennlinie zwischen den beiden Räumen ist der Wasserstand 9c, welcher je nach dem Füllungszustand des Dampfspeichers schwanken kann. In einem geschlossenen Dampf/Wasserkreislauf schwankt dann dazu auch, und zwar gegenläufig, der Wasserstand 1b im Speisewassertank 1. Die Naßdampfleitung 8 steht mit der Ladeeinrichtung des Dampfspeichers in Verbindung; für die Art der Eindüsung des Naßdampfes gibt es verschiedene -an sich bekannte- Möglichkeiten: über eine Ladeleitung 9d durch den Wasserraum, mit einer Überhubleitung 9e in den Dampfraum-, oder dergleichen mehr, wobei die verschiedenen Ladeeinrichtungen mit Armaturen versehen werden können.

Es gibt zwei Möglichkeiten den Dampfspeicher 9 zu entladen: aus dem Dampfraum 9b des Dampfspeichers 9 über eine Dampfentnahmeleitung 9h und aus dem Wasserraum 9a über eine Sattwasserentnahmeleitung 9i.

Der Sattdampf aus der Dampfentnahmeleitung 9h gelangt -gegebenenfalls über eine nicht dargestellte Überhitzerheizfläche -über die Frischdampfleitung 10 in eine Expansionsmaschine 11, die z.B. aus zwei Expansionsstufen, einer Hochdruckstufe 11a und einer Niederdruckstufe 11 b besteht, in welcher mechanische Energie (Kraft) erzeugt wird, die über den Generator 30 in elektrischen Strom verwandelt wird. Die Hochdruckstufe 11 a und die Niederdruckstufe 11b sind mit einer Überströmleitung 12 verbunden, die Niederdruckstufe 11b gibt ihren Abdampf in einen Abdampfkondensator 13 ab. Dessen Kondensat gelangt über eine Kondensatpumpe 14 und eine Kondensatleitung 15 in den Speisewassertank 1, womit der Kreislauf zunächst geschlossen ist.

Das Sattwasser aus der Sattwasserentnahmeleitung 9i des Dampfspeichers ist einer internen oder externen Wärmeverwertung zuzuführen.

Als interne Wärmeverwertung, also innerhalb des Dampf-Kreislaufes, ohne notwendigerweise eine externe Abgabe von Wärme nach außen, ist zu nennen:
Beheizung des Entgasers, des Speisewassers;
Vorwärmung der Verbrennungsluft einer dem Dampferzeuger vorgeschalteten Feuerung;
Zwischenüberhitzung des Expansionsdampfes zwischen einer Hochdruck und einer Niederdruckstufe einer Expansionsmaschine; diese Möglichkeit ist in der Fig. 1 dargestellt: Das Sattwasser aus der Sattwasserentnahmeleitung 9i gelangt über eine Sattwasserleitung 16 zum Zwischenüberhitzer 17, welcher in der Überströmleitung 12 angeordnet ist und den Dampf für die Niederdruckstufe 11 b trocknet und überhitzt. Sein abgekühltes Druckwasser gelangt über die Druckwasserleitung 18 und der Umwälzpumpe 19 in den Kreislauf zurück, z.B. in die Speiseleitung 3.

Als externe Wärmeverwertung, also eine externe Abgabe von Wärme nach außen, ist zu nennen:
Prozeßwärme, für die industrielle Co-Generation;
Nah- oder Fernwärme, im Fall einer Kraft Wärme-Kopplung; diese Möglichkeit ist in der Fig. 1 dargestellt: Das Sattwasser aus der Sattwasserentnahmeleitung 9i gelangt über eine Sattwasserleitung 16 zum Wärmeauskoppler 20, welcher über Heizleitungen 21 und 22 und einer Heißwasserförderpumpe 23 einen externen Wärmeverbraucher 24 versorg; das abgekühltes Druckwasser gelangt über die Druckwasserleitung 18 und der Umwälzpumpe 19 in den Kreislauf zurück, z.B. in die Speiseleitung 3. In der Fig. 1 ist die Kombination Zwischenüberhitzung und Fernwärmeauskopplung eingezeichnet, weswegen für die Aufteilung der jeweiligen Wärmeleistung in der Sattwasserentnahmeleitung 9i ein Dreiwegeventil 25 vorgesehen ist. Eine weitere Möglichkeit der Fernwärmeerzeugung ist in der Fig. 1 eingezeichnet: von der Überströmleitung 12 wird über eine Abzweigung 26 eine z.B. über eine Regelklappe 27 eine regelbare Dampfmenge. dem Heizkondensator 28 zugeführt, welcher mit dem externen Wärmeverbraucher 24, z.B. über die Vorlaufleitung 21 und die Rücklaufleitung 22 in Verbindung steht. Die Einbindung des Kondensates aus dem Heizkondensator ist auf verschieden Weisen möglich und in der Fig. nicht dargestellt.

Die Kombination verschiedener interner oder externer Wärmeverwertungen aus dem Sattwasser des Dampfspeichers 9 sind natürlich möglich und mit Vorteil auszuführen, wobei es für die Erfindung genügt, wenn eine Möglichkeit ausgeführt wird.

Bezüglich der Anordnung der einzelnen Komponenten eines derartigen Kraftwerkes bzw. einer Kraft Wärme-Kopplungsanlage kann der Dampfspeicher 9 auch in der Nähe der Dampfexpansionsmaschinen (Dampfturbine oder aber auch eine Dampfschrauben oder Dampfkolben-Maschine), also im Krafthaus, angeordnet werden, während der Dampferzeuger 4, welcher eigentlich nur ein Kühlkamin für ein Heißgas ist, abseits vom Krafthaus angeordnet werden kann.

Bezüglich der Schaltungsmöglichkeiten eröffnet sich eine Vielfalt, wobei nur einige genannt werden:
Heizwerk mit einem Niederdruckkessel, der im Normalbetrieb nur Heißwasser erzeugt und im Fall des geringen Wärmebedarfs bzw. bei einem Überschuß in der Feuerungsleistung zusätzlich Strom über eine Abdampfturbine mit Vakuumkondensation erzeugt
Kraft-Wärme-Kopplungsanlage, wie in der Fig. 1 gezeigt
Kraftwerk für die reine Stromerzeugung mit einer der Möglichkeiten der internen Wärmeverwertung -wie angeführt-
Zweidruckprozess für die Kraft-Wärme-Kopplungsanlage oder für das Kraftwerk mit einer reinen Stromerzeugung: Zusätzlich zum Hauptdampf wird eine Zusatzdampfmenge mit einem Zwischendruck erzeugt und der Niederdruckstufe der Expansionsmaschine eingespeist; sinngemäß ist natürlich auch eine drei oder Mehrdruckanordnung, wenngleich ab einer Dreidruckanordnung der thermodynamische Vorteil -verglichen mit dem Mehraufwand -gering ist.
Die Heizfläche des Dampferzeugers 4 ist eine Wasserrohrschlange, etwa zweimal so groß in der Heizfläche wie die eines herkömmlichen Economisers, oder ein Rauchrohrwärmetauscher, der im Gegensatz zu einem Rauchrohrkessel keinen Dampfraum hat und wesentlich kompakter baut.
Der Dampfspeicher 9 kann in an sich bekannter Weise liegend oder auch stehend angeordnet oder sogar geneigt sein, wie eine Eprouvette.
Der Dampfspeicher 9 muß nicht notwendigerweise an oberster Stelle des Dampferzeuger 4 angeordnet sein, sondern er kann in der Nähe der Dampfexpansionsmaschine 11 plaziert sein, wobei eine Verbindungsleitung für den Naßdampf zwischen den Dampferzeuger 4 und der Expansionsmaschine 11 vorgesehen ist.

Auch bezüglich der Betriebsweise gibt es viele Möglichkeiten, wobei die Speicherfähigkeit die hervorzuhebende Eigenschaft ist.

Beim Anfahren weist der Dampfspeicher 9 einen niedrigen Wasserstand 9c auf, die Heizfläche 7 des Dampferzeugers 4 wird zügig durchströmt und produziert vorwiegend Sattwasser, wodurch der Wasserstand und der Druck im Dampfspeicher 9 steigt, bis das Druckniveau für eine Verstromung in einer Expansionsmaschine 11 ausreicht: es geht also kein Kilojoule während des Anfahrvorganges für die Kraft und Wärmeerzeugung verloren.

Umgekehrt wird man beim Abfahren der Anlage den Druck und/oder der Wasserstand des Dampfspeichers 9 reduzieren und damit auch Verluste in der Stillstandsperiode reduzieren. Die Rauchgasabkühlung bis zuletzt ist bei den genannten Fahrweisen sichergestellt.

Zur Deckung von Belastungsspitzen in der Wärmeabnahme wird über den Wärmeauskoppler 20, z.B. durch das Erhöhen der Drehzahl an der Umwälzpumpe 19, mehr Sattwasser zugeführt, wobei der Wasserstand 9c im Dampfspeicher vorübergehend sinkt und der Wasserstand 1b im Speisewassertank vorübergehend steigt; das Laden des Dampfspeichers erfolgt in umgekehrter Weise.

Zur Deckung von Belastungsspitzen in der Stromerzeugung gibt es zwei Möglichkeiten:
In der Kraft-Wärme-Kopplungsanlage, wie in der Fig. 1 gezeigt, mit einem Wärmeauskoppler 20 und einem Heizkondensator 28 für die Versorgung eines externen Wärmeverbrauchers 24, wird vorübergehend dem Wärmeauskoppler 20 mehr Sattwasser zugeführt und dem Heizkondensator 28 durch das Androsseln der Regelklappe 27 weniger Dampf zugeführt, wodurch die Niederdruckstufe 11b mehr Dampf zur Stromerzeugung hat.
Für kurze Stromspitzen genügt eine Druckabsenkung im Dampfspeicher 9, wofür das Turbinenregelventil 29 kurzzeitig voll zu öffnen ist. Beim Laden des Dampfspeichers 9 baut sich der Druck wieder auf, indem mehr Wärme angeboten aber weniger Dampf verbraucht wird (Prinzip des Gefällespeichers).

## Patentansprüche

1. Verfahren zur Speicherung und Erzeugung von Kraft und Wärme aus Abwärme oder aus Brennstoffen, insbesondere Müll und festen Biomassen, unter Verwendung eines Dampferzeugers (4), wobei das Dampf-Wassergemisch aus der Heizfläche (7) des Dampferzeugers (4) einem Dampfspeicher (9) zugeführt wird, und der Dampfraum (9b) des Dampfspeichers (9) direkt oder über eine Überhitzerheizfläche mit einer Expansionsmaschine (11) in Verbindung steht, **dadurch gekennzeichnet, dass** das Wasser aus dem Wasserraum (9a) des Dampfspeichers (9) einem Wärmeverbraucher zugeführt wird.

2. Verfahren nach Anspruch 1, **dadurch gekennzeichnet, dass** das Dampf-Wassergemisch aus der Heizfläche (7) des Dampferzeugers (4) dem Wasserinhalt (9a) des Dampfspeichers (9) zugeführt wird.

3. Verfahren nach Anspruch 1, **dadurch gekennzeichnet dass** das Dampf-Wassergemisch aus der Heizfläche (7) des Dampferzeugers (4) dem Dampfraum (9b) des Dampfspeichers (9) zugeführt wird.

4. Einrichtung zur Durchführung des Verfahrens nach Anspruch 1, mit einem Dampferzeuger (4), einer Heizfläche (7) des Dampferzeugers (4), einem Dampfraum (9b) des in Form eines Druckgefäßes ausgebildeten Dampfspeichers (9) und einer Expansionsmaschine (11), **dadurch gekennzeichnet, dass** der Wasserraum (9a) des Dampfspeichers (9) zur Beheizung eines Entgasers mit diesem verbunden ist.

5. Verwendung der Einrichtung nach Anspruch 4, **dadurch gekennzeichnet, dass** der Wasserraum (9a) des Dampfspeichers (9) zur Beheizung einer Zwischenüberhitzung (17) des Expansionsdampfes zwischen einer Hochdruck- (11a) und einer Niederdruckstufe (11b) einer Expansionsmaschine (11) dient.

6. Verwendung der Einrichtung nach Anspruch 4, **dadurch gekennzeichnet, dass** der Wasserraum (9a) des Dampfspeichers (9) zur Beheizung einer Prozeßwärmeauskopplung für die industrielle Co-Generation dient.

7. Verwendung der Einrichtung nach Anspruch 4, **dadurch gekennzeichnet, dass** der Wasserraum (9a) des Dampfspeichers (9) zur Beheizung einer Nah- oder Fernwärme dient.

8. Verwendung der Einrichtung nach Anspruch 4, **dadurch gekennzeichnet, dass** der Wasserraum (9a) des Dampfspeichers (9) zur Beheizung einer Verbrennungsluftvorwärmung dient.

## Claims

1. A method for accumulating and generating energy and heat from waste heat or from fuels, particularly garbage and solid biomasses, by utilizing a steam generator (4), wherein the steam-water mixture is fed from the heating surface (7) of the steam generator (4) to a steam accumulator (9) and the steam chamber (9b) of the steam accumulator (9) is connected to an expansion machine (11) either directly or by means of a superheater heating surface, **characterized in that** the water from the water space (9a) of the steam accumulator (9) is fed to a heat consumer.

2. The method according to Claim 1, **characterized in that** the steam-water mixture from the heating surface (7) of the steam generator (4) is fed to the water content (9a) of the steam accumulator (9).

3. The method according to Claim 1, **characterized in that** the steam-water mixture from the heating surface (7) of the steam generator (4) is fed to the steam chamber (9b) of the steam accumulator (9).

4. A device for carrying out the method according to Claim 1, with a steam generator (4), a heating surface (7) of the steam generator (4), a steam chamber (9b) of the steam accumulator (9) realized in the form of a pressure vessel and an expansion machine (11), **characterized in that** the water space (9a) of the steam accumulator (9) is connected to a deaerator in order to realize the heating thereof.

5. The utilization of the device according to Claim 4, **characterized in that** the water space (9a) of the steam accumulator (9) serves as heating system for resuperheating (17) the expansion steam between a high-pressure stage (11a) and a low-pressure stage (11b) of an expansion machine (11).

6. The utilization of the device according to Claim 4, **characterized in that** the water space (9a) of the steam accumulator (9) serves as heating system for process heat extraction in industrial cogeneration.

7. The utilization of the device according to Claim 4, **characterized in that** the water space (9a) of the steam accumulator (9) serves as heating system for a local or district heating network.

8. The utilization of the device according to Claim 4, **characterized in that** the water space (9a) of the steam accumulator (9) serves as heating system for preheating combustion air.

## Revendications

1. Procédé pour stocker et générer de la force et de la chaleur à partir de chaleur perdue ou à partir de combustibles, en particulier des ordures et des biomasses solides, en utilisant un générateur de vapeur (4), le mélange vapeur-eau provenant de la surface de chauffage (7) du générateur de vapeur (4) étant amené à un accumulateur de vapeur (9), et l'espace vapeur (9b) de l'accumulateur de vapeur (9) étant en liaison directe ou au moyen d'une surface de chauffage de surchauffeur avec une machine d'expansion (11), **caractérisé en ce que** l'eau provenant de l'espace eau (9a) de l'accumulateur de vapeur (9) est amenée à un consommateur de chaleur.

2. Procédé selon la revendication 1, **caractérisé en ce que** le mélange vapeur-eau provenant de la surface de chauffage (7) du générateur de vapeur (4) est amené au contenu d'eau (9a) de l'accumulateur de vapeur (9).

3. Procédé selon la revendication 1, **caractérisé en ce que** le mélange vapeur-eau provenant de la surface de chauffage (7) du générateur de vapeur (4) est amené à l'espace vapeur (9b) de l'accumulateur de vapeur (9).

4. Dispositif pour mettre en oeuvre le procédé selon la revendication 1, comprenant un générateur de vapeur (4), une surface de chauffage (7) du générateur de vapeur (4), un espace vapeur (9b) de l'accumulateur de vapeur (9) conçu sous la forme d'un récipient sous pression et une machine d'expansion (11), **caractérisé en ce que** l'espace eau (9a) de l'accumulateur de vapeur (9) est relié à un dégazeur pour le chauffage de celui-ci.

5. Utilisation du dispositif selon la revendication 4, **caractérisée en ce que** l'espace eau (9a) de l'accumulateur de vapeur (9) sert au chauffage d'un surchauffage intermédiaire (17) de la vapeur d'expansion entre un étage de haute pression (11a) et un étage de basse pression (11b) d'une machine d'expansion (11).

6. Utilisation du dispositif selon la revendication 4, **caractérisée en ce que** l'espace eau (9a) de l'accumulateur de vapeur (9) sert au chauffage d'une dissociation de chaleur de procédé pour la coproduction industrielle.

7. Utilisation du dispositif selon la revendication 4, **caractérisée en ce que** l'espace eau (9a) de l'accumulateur de vapeur (9) sert au chauffage d'une chaleur proche ou d'une chaleur à grande distance.

8. Utilisation du dispositif selon la revendication 4, **caractérisée en ce que** l'espace eau (9a) de l'accumulateur de vapeur (9) sert au chauffage d'un préchauffage d'air de combustion.
